# EUROPÄISCHE PATENTSCHRIFT

(11) **EP 3 250 147 B1**
(45) Veröffentlichungstag und Bekanntmachung des Hinweises auf die Patenterteilung: **03.03.2021**
(21) Anmeldenummer: 16700739.2
(22) Anmeldetag: 15.01.2016
(51) Int. Cl.: A61C 8/00, A61C 9/00

(54) **SCANKÖRPERSYSTEM ZUR BESTIMMUNG EINER POSITIONIERUNG UND AUSRICHTUNG EINES DENTALIMPLANTATS**
SCANNING BODY SYSTEM FOR DETERMINING A POSITION AND ORIENTATION OF A DENTAL IMPLANT
SYSTÈME DE CORPS DE BALAYAGE POUR DÉTERMINER UNE POSITION ET UNE ORIENTATION D'UN IMPLANT DENTAIRE

(30) Priorität: 26.01.2015 DE 202015000801 U
(43) Veröffentlichungstag der Anmeldung: 06.12.2017
(73) Patentinhaber: nt-trading GmbH & Co. KG, 76187 Karlsruhe (DE)
(72) Erfinder: JAHN, Dirk, 76835 Weyher (DE)
(74) Vertreter: Patentanwälte Ruff, Wilhelm, Beier, Dauster & Partner mbB
(86) Internationale Anmeldenummer: PCT/EP2016/050754
(87) Internationale Veröffentlichungsnummer: WO 2016/120097

(56) Entgegenhaltungen:
- EP-A1- 3 117 794
- WO-A1-2012/126475
- WO-A2-2007/005490
- DE-U1-202013 005 821
- US-A1- 2006 014 120
- US-A1- 2012 295 223
- US-A1- 2014 113 252

## Beschreibung

Die Erfindung betrifft ein Scankörpersystem zur Bestimmung einer Positionierung und Ausrichtung eines Dentalimplantats, mit einem ein Interface umfassenden Fußteil, sowie mit einem Scanteil, der eine dreidimensionale Scankontur aufweist und mit dem Fußteil zu einem Scankörper fest verbunden ist, sowie mit einer Befestigungsschraube, die zur Befestigung des Scankörpers in dem Dentalimplantat vorgesehen ist.

Ein derartiges Scankörpersystem ist aus der DE 20 2013 005 821 U1 und aus US2012/295223 bekannt. Das bekannte Scankörpersystem weist einen Scankörper auf, der einen Fußteil sowie einen Scanteil umfasst, die aus unterschiedlichen Materialien als separate Bauteile hergestellt und anschließend zu dem Scankörper miteinander verpresst sind. Vor dem Zusammenfügen des Fußteils und des Scanteils wird eine Befestigungsschraube in einen Führungskanal des Fußteils eingesetzt, die nach dem kraftschlüssigen Zusammenfügen des Fußteils und des Scanteils verliersicher in dem Scankörper gehalten ist. Der Scanteil weist auf seiner dem Fußteil abgewandten Oberseite einen Durchtritt in ein Inneres des Scanteils auf, in dem die Befestigungsschraube positioniert ist. Der Durchtritt dient dazu, ein Werkzeug hindurchführen zu können, um die Befestigungsschraube zu drehen. Ein Querschnitt des Durchtritts ist kleiner als ein Durchtritt eines Schraubenkopfs der Befestigungsschraube, so dass die Befestigungsschraube nach dem Zusammenfügen des Fußteils und des Scanteils verliersicher in dem Scankörper gehalten ist.

Aufgabe der Erfindung ist es, ein Scankörpersystem der eingangs genannten Art zu schaffen, das gegenüber dem Stand der Technik verbesserte Funktionsmöglichkeiten aufweist.

Diese Aufgabe wird durch die Merkmale des Anspruchs 1 gelöst. Der Fußteil und die Befestigungsschraube sind mit wenigstens einem mechanischen Rückhaltemittel versehen, damit die Befestigungsschraube nach einem Einsetzen durch einen Durchtritt des Scanteils in den Scankörper hinein verliersicher in dem Scankörper hält. Das erfindungsgemäße Scankörpersystem ermöglicht eine separate Aufbewahrung und Handhabung von Scankörper und Befestigungsschraube. Dennoch ist die Befestigungsschraube nach einem Einsetzen in den Scankörper verliersicher in dem Scankörper gehalten, so dass ein versehentlicher Verlust der Befestigungsschraube insbesondere bei intraoraler Anwendung des Scankörpersystems vermieden wird.

In Ausgestaltung der Erfindung sind die Rückhaltemittel derart gestaltet, dass die Befestigungsschraube nach einem Einsetzen in den Scankörper wieder aus dem Scankörper heraus entfernt werden kann. Dies ermöglicht eine gegenüber dem Stand der Technik verbesserte Reinigungsfähigkeit des Scankörpersystems. Denn durch das mögliche Entfernen der Befestigungsschraube aus dem Scankörper ist eine verbesserte Reinigungsmöglichkeit des Inneren des Scankörpers gegeben. Das Scankörpersystem ermöglicht hierdurch eine besonders hygienische Mehrfachanwendung.

In weiterer Ausgestaltung der Erfindung ist der Durchtritt des Scanteils auf einer zu dem Fußteil abgewandten Stirnseite vorgesehen, und ein Querschnitt des Durchtritts ist gleich groß oder größer als ein größter Querschnitt der Befestigungsschraube gestaltet. Dadurch ist gewährleistet, dass die Befestigungsschraube von außen durch den Durchtritt des Scanteils hindurch ins Innere des Scankörpers eingeführt werden kann.

Gemäß der Erfindung ist das mechanische Rückhaltemittel an einem Außenumfang der Befestigungsschraube und an einem Innenumfang eines die Befestigungsschraube umgebenden Führungskanals des Fußteils vorgesehen. Das mechanische Rückhaltemittel bildet vorzugsweise einen kraftschlüssigen oder einen formschlüssigen Rückhalt für die Befestigungsschraube. Durch den Scanteil des Scankörpers hindurch kann die Befestigungsschraube jedoch sowohl von außen eingesetzt als auch nach einem Einsetzen wieder nach außen entfernt werden.

Gemäß der Erfindung ist das Rückhaltemittel als über eine Außenkontur der Befestigungsschraube radial nach außen abragender, elastisch nachgiebiger Ringbereich ausgeführt. Der elastisch nachgiebige Ringbereich kann stoffschlüssig an der Befestigungsschraube, insbesondere durch Anvulkanisieren oder Verkleben, angeordnet sein. Alternativ kann der elastisch nachgiebige Ringbereich durch wenigstens eine separat hergestellte und kraft- oder formschlüssig mit der Außenkontur der Befestigungsschraube verbundene elastische Ringstruktur gestaltet sein.

Gemäß der Erfindung weist der Ringbereich einen O-Ring aus einem Elastomermaterial auf, der in einer Ringnut der Befestigungsschraube gehalten ist. Der Ringnut ist an einem Schraubenkopf der Befestigungsschraube vorgesehen. Die Ringnut kann durch spanende Bearbeitung in den Schraubenkopf der Befestigungsschraube eingebracht werden. Der elastisch nachgiebige O-Ring kann anschließend in einfacher Weise elastisch aufgeweitet und in die Ringnut eingesetzt werden. Als Elastomermaterial werden sowohl Materialien aus Kunst- oder Naturkautschuk als auch Materialien aus thermoplastischen Elastomeren verstanden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Schnittdarstellung eine erste Ausführungsform eines Scankörpersystems welches nicht Teil der beanspruchten Erfindung ist.
- Fig. 2: ebenfalls in einer Schnittdarstellung die Ausführungsform des erfindungsgemäßen Scankörpersystems.

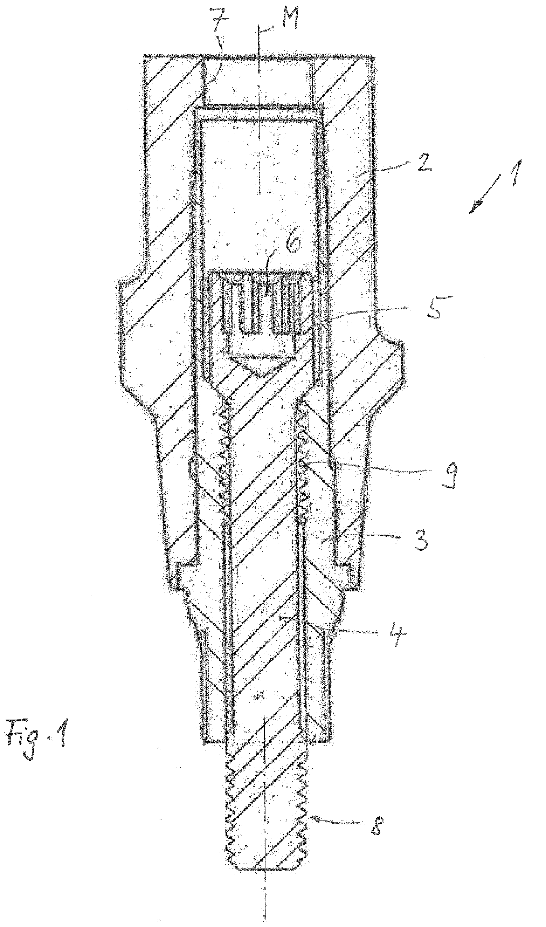

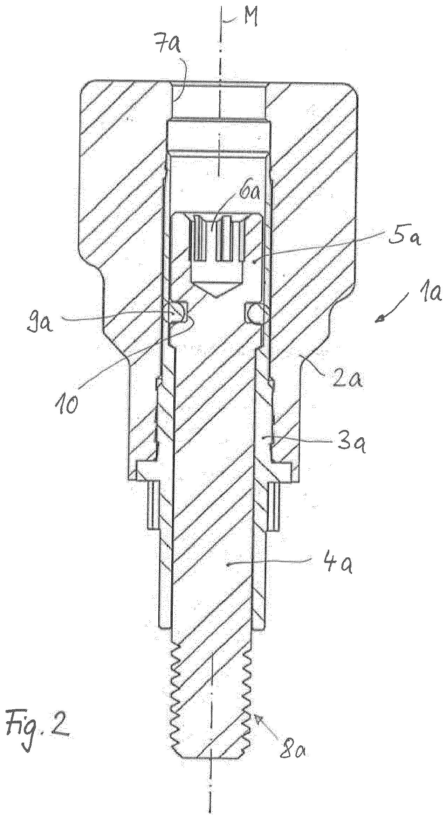

Beide Scankörpersysteme 1 und 1a gemäß den Fig. 1 und 2 weisen grundsätzlich den gleichen Aufbau auf. Funktionsgleiche Teile oder Abschnitte der Scankörpersysteme 1, 1a sind daher mit gleichen Bezugszeichen, bezüglich der Ausführungsform nach Fig. 2 jedoch unter Hinzufügung des Buchstabens a versehen. Beide Scankörpersysteme 1, 1a weisen jeweils einen Scankörper auf, der sich aus einem Scanteil 2 und einem Fußteil 3 zusammensetzt. Jeder Fußteil 3, 3a ist aus einem metallischen Material, vorzugsweise einer Titanlegierung, hergestellt. Jeder Scanteil 2 ist aus einem Kunststoffmaterial, vorliegend aus PEEK, geformt und weist im Bereich seiner Außenkontur mehrere, unterschiedlich gestaltete Scanflächen auf, die über einen Umfang des Scanteils 2 verteilt angeordnet sind und eine dreidimensionale Scankontur definieren. Der Scanteil 2, 2a und der Fußteil 3, 3a sind durch koaxiales Zusammenfügen längs einer Mittellängsachse M fest miteinander verbunden. Das Zusammenfügen erfolgt kraftschlüssig durch Einpressen des Fußteils 3, 3a in den Scanteil 2. Hierzu ist der Scanteil 2, 2a mit einer zu gegenüberliegenden Stirnseiten hin offenen Aufnahme versehen, die auf einer zu dem Fußteil 3, 3a abliegenden Seite in einen nachfolgend näher beschriebenen Durchtritt 7, 7a mündet. Einander zugewandte Kontaktflächen des Fußteils 3, 3a einerseits und des Scanteils 2, 2a andererseits können zudem zusätzlich mit Rastprofilierungen versehen sein, um einen Zusammenhalt zwischen Scanteil 2, 2a und Fußteil 3, 3a nach dem Zusammenpressen weiter zu verbessern.

Durch das Zusammenfügen des Scanteils 2, 2a mit dem Fußteil 3, 3a entsteht ein baueinheitlich handhabbarer Scankörper, der in ein nicht dargestelltes Dentalimplantat einsetzbar und mittels eines nicht näher bezeichneten Interface an einem über den Scanteil 2, 2a gegenüberliegend zu dem Durchtritt 7, 7a hinausragenden Abschnitt des Fußteils 3, 3a drehgesichert in dem Dentalimplantat positionierbar ist. Das Interface an dem relativ zu dem Scanteil 2, 2a unteren Endabschnitt des Fußteils 3, 3a ist an seinem Außenumfang mit rotationsunsymmetrischen Profilierungen versehen, die auf komplementäre Innenprofilierungen des Dentalimplantats abgestimmt sind.

Das Scankörpersystem 1, 1a weist zudem eine Befestigungsschraube 4, 4a auf, die an einem oberen Stirnendbereich mit einem Schraubenkopf 5, 5a sowie an einem gegenüberliegenden Stirnendbereich mit einem Außengewinde 8, 8a versehen ist. Das Außengewinde 8, 8a ist komplementär zu einem Innengewinde des Dentalimplantats ausgeführt, um ein Ein- und Ausschrauben der Befestigungsschraube 4, 4a relativ zum Dentalimplantat zu ermöglichen.

Der Schraubenkopf 5, 5a der Befestigungsschraube 4, 4a ist zylindrisch gestaltet und weist einen Durchmesser auf, der größer ist als ein zylindrischer Schraubenschaft der jeweiligen Befestigungsschraube 4, 4a, an dessen unterem Stirnendbereich das Außengewinde 8, 8a vorgesehen ist. Der Durchmesser des Schraubenkopfs 5, 5a der Befestigungsschraube 4, 4a ist jedoch kleiner als oder gleich groß wie ein Durchmesser des Durchtritts 7, 7a am oberen Stirnendbereich des Scanteils 2, 2a. Dadurch ist es möglich, dass die Befestigungsschraube 4, 4a separat zu dem Scankörper 2, 3; 2a, 3a aufbewahrt und gehandhabt werden kann. Die Befestigungsschraube 4, 4a wird für eine betriebsfertige Montage des Scankörpersystems 1, 1a von oben her koaxial zu der Mittellängsachse M des Scankörpers 2, 3; 2a, 3a durch den Durchtritt 7, 7a des Scanteils 2, 2a hindurchgeschoben.

Bei der Ausführungsform nach Fig. 1 ist an einem Innenumfang eines in dem Scanteil 2 erstreckten Führungskanals des Fußteils 3 an einem zu dem Interface abliegenden oberen Abschnitt ein Innengewindeabschnitt 9 vorgesehen, der als mechanisches Rückhaltemittel zur Sicherung der Befestigungsschraube 4 in dem Scankörper 2, 3 dient. Der Innengewindeabschnitt 9 ist komplementär ausgeführt zu dem Außengewinde 8 der Befestigungsschraube 4. Nach dem Einführen der Befestigungsschraube 4 von oben her durch den Durchtritt 7 hindurch trifft das Außengewinde 8 auf den Innengewindeabschnitt 9 des Fußteils 3. Durch einfaches Einschrauben der Befestigungsschraube 4 mittels eines Werkzeugs, das in die Werkzeugangriffsflächen 6 eingreift, kann die Befestigungsschraube 4 durch den Innengewindeabschnitt 9 hindurchgeschraubt werden. Der Innengewindeabschnitt 9 erstreckt sich lediglich über etwa ein Drittel der axialen Länge des nicht näher bezeichneten Führungskanals des Fußteils 3, so dass die Befestigungsschraube 4 nach dem Durchschrauben des Außengewindes 8 durch den Innengewindeabschnitt 9 wieder axial beweglich ist. Der Innengewindeabschnitt 9 verhindert jedoch, dass die Befestigungsschraube 4 axial nach oben wieder aus dem Durchtritt 7 herausgeschoben werden kann. Ein Entfernen der Befestigungsschraube 4 ist vielmehr lediglich dadurch möglich, dass die Befestigungsschraube 4 zunächst wieder axial nach oben geschoben wird, bis das Außengewinde 8 an einem unteren Rand des Innengewindeabschnitts 9 anliegt. Anschließend muss die Schraube über diesen Innengewindeabschnitt 9 axial nach oben herausgeschraubt werden, bevor sie freikommt und vollständig nach außen entnommen werden kann.

Bei der Ausführungsform nach Fig. 2 weist der Fußteil 3a in seinem Führungskanal keinen Innengewindeabschnitt auf. Vielmehr ist der Führungskanal zylindrisch ausgeführt, so dass die Befestigungsschraube 4a mit ihrem Schraubenschaft in diesem Führungskanal axial verschoben werden kann. Das mechanische Rückhaltemittel wird bei der Befestigungsschraube 4a durch einen radial elastisch nachgiebigen O-Ring 9a geschaffen, der in einer einstückig im Schraubenkopf 5a eingeformten Ringnut 10 gehalten ist. Eine Tiefe der Ringnut 10 ist derart ausgeführt, dass der O-Ring radial so weit elastisch eingedrückt werden kann, dass er nicht mehr über eine Außenkontur des Schraubenkopfs 5a der Befestigungsschraube hinausragt. Die elastische Vorspannung des O-Rings 9a ist so ausgeführt, dass der O-Ring 9a immer radial nach außen gedrückt wird und so einen kraftschlüssigen Rückhalt der Befestigungsschraube 4a in dem Fußteil 3a und in dem Scanteil 2a ermöglicht.

Da der Durchmesser des Schraubenkopfs 5a kleiner oder gleich groß ist wie der Durchtritt 7a des Scanteils 2a, kann die Befestigungsschraube 4a axial von oben her in den Scankörper 2a, 3a eingeschoben werden. Sobald der O-Ring 9a, der in der Ringnut 10 gehalten ist, an einem oberen Stirnrand des Durchtritts 7a zur Anlage kommt, wird er durch seine elastische Nachgiebigkeit nach innen in die Ringnut 10 gedrückt, wodurch die Befestigungsschraube 4a weiter nach unten gleiten kann. Die radial nach außen wirkende elastische Spannung des O-Rings 9a ist ausreichend, um die Befestigungsschraube 4a in dem Scankörper 2a, 3a zu halten. Zudem ist zwischen dem Durchtritt 7a und der anschließenden Aufnahme des Scanteils 2a für den Fußteil 3a eine radial nach außen erweiterte Ringstufe vorgesehen, so dass der O-Ring 9a sich bei einer axialen Verschiebung der Befestigungsschraube 4a nach oben zusätzlich auch noch formschlüssig an dieser Ringstufe abstützt. Falls jedoch in dem in Fig. 2 dargestellten, eingesetzten Zustand der Befestigungsschraube 4a von unten her, d.h. von einer dem Außengewinde 8a zugewandten Stirnseite her, eine Axialkraft nach oben auf die Befestigungsschraube 4a ausgeübt wird, wird der O-Ring 9a wieder elastisch radial nach innen im Bereich der Ringschulter zurückgedrückt und kann durch den Durchtritt 7a nach oben gleiten, wodurch die Befestigungsschraube 4a wieder aus der Aufnahme in dem Scankörper 2a, 3a axial entnommen werden kann. Diese Entnahme, d.h. das Entfernen der Befestigungsschraube 4, 4a, ermöglicht bei beiden Scankörpersystemen 1, 1a eine besonders einfache und hygienische Reinigung des Inneren des verbliebenen Scankörpers 2, 3; 2a, 3a. Zudem kann auch die Befestigungsschraube 4, 4a selbst in einfacher Weise gereinigt werden, solange sie von dem Scankörper 2, 3; 2a, 3a entfernt ist.

## Patentansprüche

1. Scankörpersystem (1a) zur Bestimmung einer Positionierung und Ausrichtung eines Dentalimplantats, mit einem ein Interface umfassenden Fußteil (3a), sowie mit einem Scanteil (2a), der eine dreidimensionale Scankontur aufweist und mit dem Fußteil (3a) zu einem Scankörper fest verbunden ist, sowie mit einer Befestigungsschraube (4a), die zur Befestigung des Scankörpers in dem Dentalimplantat vorgesehen ist, *wobei der Fußteil in seinem Führungskanal keinen Innengewindeabschnitt aufweist und wobei der Führungskanal zylindrisch ausgeführt ist,* wobei die Befestigungsschraube (4a) einen zylindrischen Schraubenschaft, an dessen unterem Stirnendbereich ein Außengewinde (8a) vorgesehen ist, das komplementär zu einem Innengewinde des Dentalimplantats ausgeführt ist, und einen zylindrischen Schraubenkopf (5a) an einem oberen Stirnendbereich aufweist, dessen Durchmesser größer ist, als der zylindrische Schraubenschaft, wobei die Befestigungsschraube (4a) mit wenigstens einem mechanischen Rückhaltemittel (9a) versehen ist, das die Befestigungsschraube (4a) nach einem Einsetzen durch einen Durchtritt (7a) des Scanteils (2a) in den Scankörper hinein verliersicher in dem Scankörper hält, wobei das Rückhaltemittel (9a) als über eine Außenkontur der Befestigungsschraube (4a) radial nach außen abragender, elastisch nachgiebiger Ringbereich ausgeführt ist, und wobei der Ringbereich einen O-Ring (9a) aus einem Elastomermaterial aufweist, der in einer Ringnut (10) der Befestigungsschraube gehalten ist, **dadurch gekennzeichnet, dass** zwischen dem Durchtritt (7a) und der anschließenden Aufnahme des Scanteils (2a) für den Fußteil (3a) eine radial nach außen erweiterte Ringstufe vorgesehen ist, so dass der O-Ring (9a) sich bei einer axialen Verschiebung der Befestigungsschraube (4a) nach oben zusätzlich formschlüssig an dieser Ringstufe abstützt.

2. Scankörpersystem nach Anspruch 1, **dadurch gekennzeichnet, dass** der Ringbereich (9a) derart gestaltet ist, dass die Befestigungsschraube (4a) nach einem Einsetzen in den Scankörper wieder aus dem Scankörper heraus entfernt werden kann, wobei der Durchtritt (7a) des Scanteils (2a) auf einer zu dem Fußteil (3a) abgewandten Stirnseite vorgesehen ist, und wobei ein Querschnitt des Durchtritts (7a) gleich groß oder größer als ein größter Querschnitt der Befestigungsschraube (4a) gestaltet ist.

## Claims

1. Scanning body system (1a) for determining a positioning and orientation of a dental implant, with a base part (3a) comprising an interface, and with a scanning part (2a) which has a three-dimensional scanning contour and is firmly connected to the base part (3a) to form a scanning body, and with a fastening screw (4a) which is provided for fastening the scanning body in the dental implant, wherein the base part (3a) does not have an internal thread section within its locating channel, and wherein the locating channel has a cylindrical design, wherein the fastening screw (4a) has a cylindrical screw shaft, where the lower face end region of the screw shaft is provided with an external thread (8a) which is complementary to an internal thread of the dental implant, and has a cylindrical screw head (5a) on an upper face end region, with the diameter thereof greater than the cylindrical screw shaft, wherein the fastening screw (4a) is provided with at least one mechanical retaining means (9a) which holds the fastening screw (4a), after inserting through a passage (7a) of the scanning part (2a) into the scanning body, captively within the scanning body, wherein the retaining means (9a) is an elastically resilient annular portion protruding radially outwards beyond an outer contour of the fastening screw (4a), and wherein the annular portion includes an O-ring (9a) made of an elastomer material, which ring is held in an annular groove (10) of the fastening screw,
**characterized in that**
a radially outwards enlarged annular step is provided between the passage (7a) and the adjacent seat of the scanning part (2a) for the base part (3a) such that, during an axial shifting of the fastening screw (4a) towards the top, the O-ring (9a) is additionally supported on said annular step in a form-fitting manner.

2. Scanning body system according to claim 1, **characterized in that** the annular portion (9a) is designed such that the fastening screw (4a), after inserting into the scanning body, can be removed from the scanning body later on, wherein the passage (7a) of the scanning part (2a) is provided on an end side facing away from the base part (3a), and wherein a cross section of the passage (7a) is equal to or greater than a greatest cross section of the fastening screw (4a).

## Revendications

1. Système de corps de balayage (1a) pour déterminer un positionnement et une orientation d'un implant dentaire, avec une partie de socle (3a) comprenant une interface, ainsi qu'avec une partie de balayage (2a) présentant un contour de balayage tridimensionnel et étant reliée fixement à la partie de socle (3a) en formant un corps de balayage, ainsi qu'avec une vis de fixation (4a) prévue pour la fixation du corps de balayage dans l'implant dentaire, dans lequel la partie de socle ne présente pas de section de filetage intérieur dans son canal de direction, et dans lequel le canal de direction est sous forme cylindrique, dans lequel la vis de fixation (4a) présente une tige de vis cylindrique où la région d'extrémité frontale inférieure de la tige de vis est dotée d'un filetage extérieur (8a) sous forme complémentaire à un filetage intérieur de l'implant dentaire, et présente une tête de vis (5a) cylindrique sur une région d'extrémité frontale supérieure, le diamètre de la tête de vis étant plus grand que la tige de vis cylindrique, dans lequel la vis de fixation (4a) est dotée d'au moins un moyen de retenue mécanique (9a) retenant la vis de fixation (4a), après insertion à travers un passage (7a) de la partie de balayage (2a) dans l'intérieur du corps de balayage, dans le corps de balayage de manière captive, dans lequel le moyen de retenue (9a) est sous forme de zone annulaire élastiquement souple faisant saillie radialement vers l'extérieur au-delà d'un contour extérieur de la vis de fixation (4a), et dans lequel la zone annulaire présente un joint torique (9a) fait d'un matériau élastomère, ledit joint torique étant retenu dans une rainure annulaire (10) de la vis de fixation,
**caractérisé en ce que**
entre le passage (7a) et le siège adjacent de la partie de balayage (2a) pour la partie de socle (3a) est prévue une saillie annulaire élargie radialement vers l'extérieur de telle manière que, lors d'un déplacement axial de la vis de fixation (4a) vers le haut, le joint torique (9a) prend appui en outre sur ladite saillie annulaire par complémentarité de forme.

2. Système de corps de balayage selon la revendication 1, **caractérisé en ce que** la zone annulaire (9a) est configurée de telle manière que la vis de fixation (4a) après insertion dans le corps de balayage peut encore être enlevée du corps de balayage, dans lequel le passage (7a) de la partie de balayage (2a) est prévu sur une face frontale détournée de la partie de socle (3a), et dans lequel une section transversale du passage (7a) est égale ou supérieure à une section transversale la plus grande de la vis de fixation (4a).
